# EUROPÄISCHE PATENTANMELDUNG

(11) **EP 1 880 901 A1**
(43) Veröffentlichungstag der Anmeldung: **23.01.2008**
(21) Anmeldenummer: 07013174.3
(22) Anmeldetag: 05.07.2007
(51) Int. Cl.: B60Q 1/076

(54) **Scheinwerferverstellvorrichtung mit Getriebe**

(30) Priorität: 21.07.2006 DE 102006034243
(71) Anmelder: Schefenacker Vision Systems Germany GmbH, 71409 Schwaikheim (DE)
(72) Erfinder: Flynn, Daniel J., Morphett Vale, 5162 (AU); Apfelbeck, Robert, 73268 Hochdorf (DE); Leittretter, Andreas, 73770 Denkendorf (DE)
(74) Vertreter: Thämer, Wolfgang

(57) **Zusammenfassung**

Die Erfindung betrifft eine Scheinwerferverstellvorrichtung (10) mit mindestens zwei Antriebseinheiten (30,70) zur Verstellung eines Lichtmoduls (5), wobei jede Antriebseinheit (30,70) mindestens einen Antriebsmotor (31,71) umfasst. Dazu umfasst jede Antriebseinheit (30,70) ein Getriebe (32,72) mit zwei relativ zueinander beweglichen Eingangselementen (33,34,73,74), die mittels eines Koppelelements (35,75) verbunden sind. Mindestens ein Eingangselement (33,34) jeder Antriebseinheit (30,70) ist mit dem Antriebsmotor (31,71) der Antriebseinheit (30,70) gekoppelt. Jedes Koppelement (35,75) ist mit einem Abtriebselement (36,76) des jeweiligen Getriebes (32,72) verbunden. Außerdem weist jedes Abtriebselement (36,76) einen Adapter (48,88) zum Anschluss an das Lichtmodul (5) auf.

Mit der vorliegenden Erfindung wird eine Scheinwerferverstellvorrichtung entwickelt, die eine hohe Dynamik aufweist und die eine einfache Justierung des Scheinwerfers in mindestens zwei Richtungen ermöglicht.

## Beschreibung

Die Erfindung betrifft eine Scheinwerferverstellvorrichtung mit mindestens zwei Antriebseinheiten zur Verstellung eines Lichtmoduls, wobei jede Antriebseinheit mindestens einen Antriebsmotor umfasst sowie einen Kraftfahrzeugscheinwerfer mit einer derartigen Scheinwerferverstellvorrichtung und mit einem an dieser angeschlossenen Lichtmodul.

Aus der DE 198 02 023 A1 ist eine Scheinwerferverstellvorrichtung mit einer inneren und einer äußeren Schwenkvorrichtung bekannt. Bei der Betätigung der äußeren Schwenkvorrichtung wird die innere Schwenkvorrichtung mitsamt ihrer Antriebseinheit bewegt. Aufgrund der großen bewegten Massen ist das System träge. Eine Justierung des Scheinwerfers ist nur durch wiederholten Ein- und Ausbau der Scheinwerferkomponenten möglich.

Der vorliegenden Erfindung liegt daher die Problemstellung zugrunde, eine Scheinwerferverstellvorrichtung zu entwickeln, die eine hohe Dynamik aufweist und die eine einfache Justierung des Scheinwerfers in mindestens zwei Richtungen ermöglicht. Außerdem soll ein Scheinwerfer mit einer derartigen Scheinwerferverstellvorrichtung und mit einem Lichtmodul entwickelt werden.

Diese Problemstellung wird mit den Merkmalen des Hauptanspruches gelöst. Dazu umfasst jede Antriebseinheit ein Getriebe mit zwei relativ zueinander beweglichen Eingangselementen, die mittels eines Koppelelements verbunden sind. Mindestens ein Eingangselement jeder Antriebseinheit ist mit dem Antriebsmotor der Antriebseinheit gekoppelt. Jedes Koppelement ist mit einem Abtriebselement des jeweiligen Getriebes verbunden. Außerdem weist jedes Abtriebselement einen Adapter zum Anschluss an das Lichtmodul auf.

Weitere Einzelheiten der Erfindung ergeben sich aus den Unteransprüchen und der nachfolgenden Beschreibung schematisch dargestellter Ausführungsformen.
- Figur 1:: Querschnitt einer Scheinwerferverstellvorrichtung eines Kraftfahrzeugscheinwerfers;
- Figur 2:: Schnitt A - A von Figur 1 mit einem Lichtmodul;
- Figur 3:: Draufsicht auf Figur 2 bei abgenommenen Gehäuseoberteil;
- Figur 4:: Rückansicht der Figur 2 bei abgenommenen Deckel;
- Figur 5:: Scheinwerferverstellvorrichtung mit Zahnstangen;
- Figur 6:: Kopplung zweier Verstellvorrichtungen.

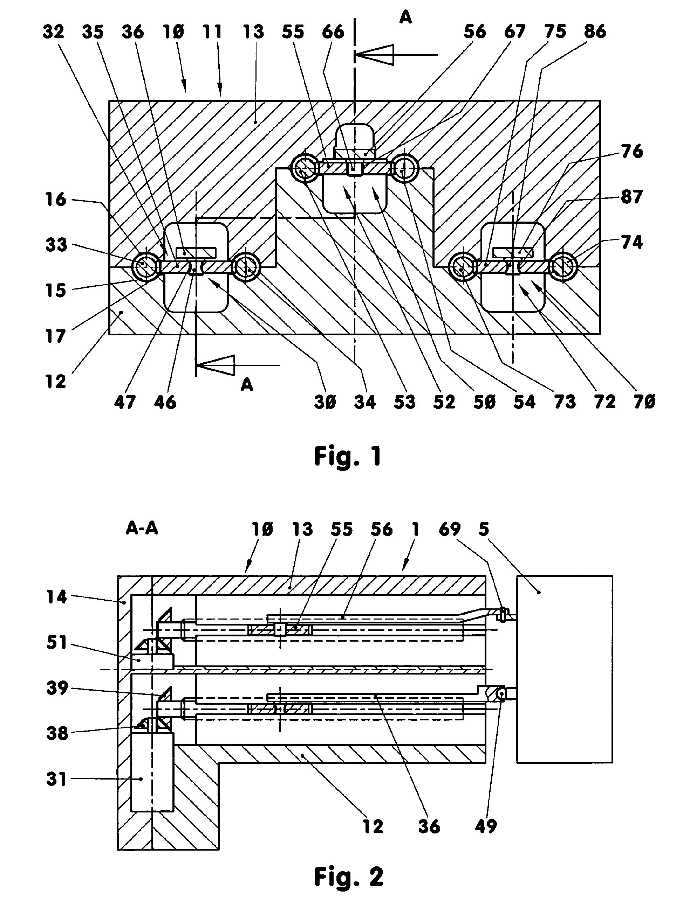

Die Figuren 1 - 4 zeigen einen Kraftfahrzeugscheinwerfer (1) mit einer Scheinwerferverstellvorrichtung (10) und einem Lichtmodul (5). Mittels der Scheinwerferverstellvorrichtung (10) kann beispielsweise die Leuchtweite, die Leuchtneigung, der Leuchtwinkel und die Einbauhöhe des Lichtmoduls (5) eingestellt werden. Hierzu ist die Scheinwerferverstellvorrichtung (10) z.B. in einem hier nicht dargestellten Scheinwerfergehäuse befestigt. Sie trägt das Lichtmodul (5), das gegebenenfalls zusätzlich im Scheinwerfergehäuse abgestützt sein kann.

Die Scheinwerferverstellvorrichtung (10) umfasst ein Gehäuse (11), in dem beispielsweise drei Antriebseinheiten (30, 50, 70) angeordnet sind. Das Gehäuse (11) umfasst ein Unterteil (12), ein Oberteil (13) sowie einen Deckel (14). Diese Bauteile (12 - 14) sind beispielsweise aus Kunststoff, aus Metall oder einem Verbundwerkstoff hergestellt. Sie sind miteinander z.B. mittels hier nicht dargestellter Schrauben verschraubt, sie können aber auch mittels Rastverbindungen, Clipsverbindungen, Klebeverbindungen etc. form- und/oder kraftschlüssig miteinander verbunden sein. Zusätzlich können die Bauteile (12 - 14) mittels formschlüssiger Elemente, z.B. mittels Zentrierstiften, zueinander justiert sein.

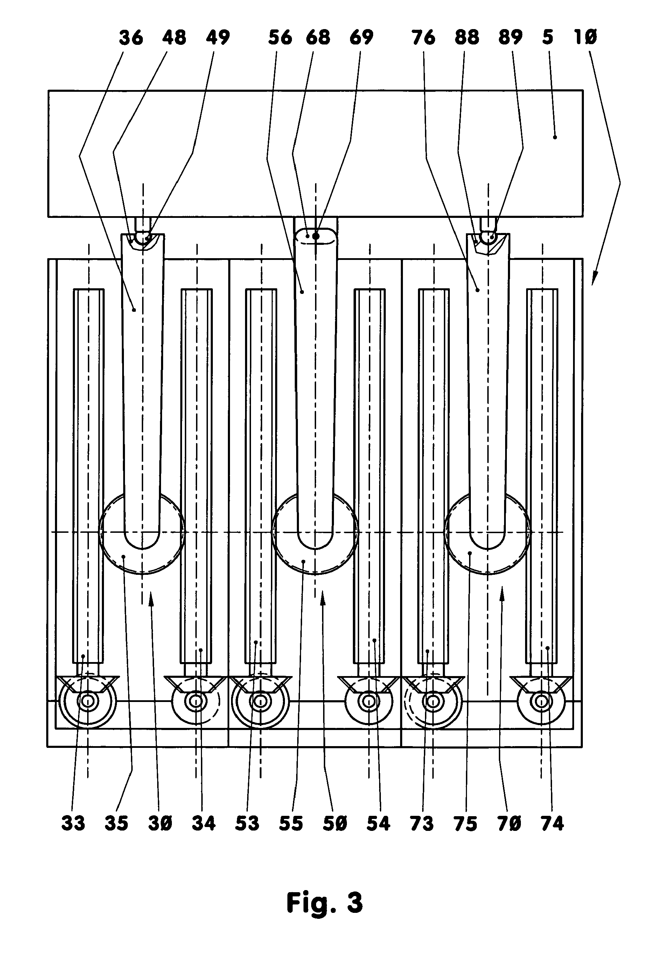

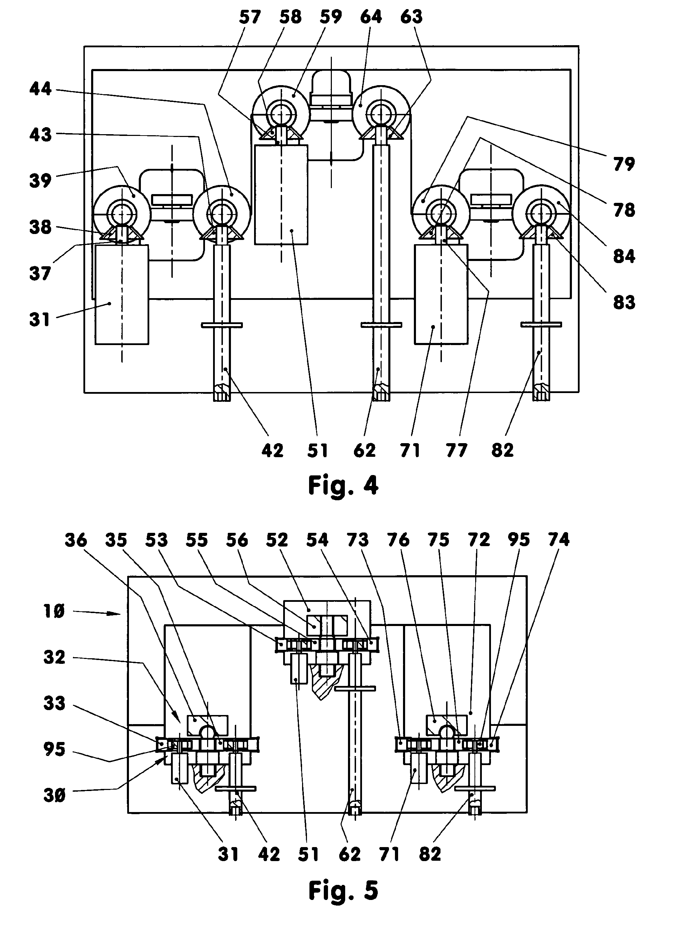

Die drei Antriebseinheiten (30, 50, 70) sind hier parallel zueinander angeordnet. Die linke (30) und die rechte Antriebseinheit (70) sind in den Darstellungen der Figuren 3 und 4 in der gleichen Ebene symmetrisch zur vertikalen Mittenlängsebene des Lichtmoduls (5) und der Scheinwerferverstellvorrichtung (10) angeordnet. Die mittlere Antriebseinheit (50) liegt in diesen Darstellungen symmetrisch zur vertikalen Mittenlängsebene oberhalb der Ebene der anderen beiden Antriebseinheiten (30, 70). Die drei Antriebseinheiten (30, 50, 70) können z.B. auch derart angeordnet sein, dass die Antriebseinheiten (50) und (70) übereinander liegen und die Antriebseinheit (30) in der Querrichtung des Kraftfahrzeugscheinwerfers (1) versetzt hierzu angeordnet ist. Ebenfalls ist es denkbar, die Scheinwerferverstellvorrichtung (10) mit nur zwei Antriebseinheiten (30, 70) auszuführen. Die Scheinwerferverstellvorrichtung (10) und das Lichtmodul (5) sind dann zusätzlich beispielsweise in einer Lagerstelle verbunden.

Die drei hier dargestellten Antriebseinheiten (30, 50, 70) umfassen in diesem Ausführungsbeispiel jeweils einen Antriebsmotor (31, 51, 71), jeweils ein Getriebe (32, 52, 72) mit zwei Eingangselementen (33, 34; 53, 54; 73, 74), jeweils einem Koppelelement (35, 55; 75) und jeweils einem Abtriebselement (36; 56; 76). Der einzelne Antriebsmotor (31, 51, 71) ist z.B. ein Gleichstrommotor mit einer Masse von beispielsweise 125 Gramm. Seine Motorwelle (37; 57; 77) ist hier vertikal angeordnet und trägt ein Kegelrad (38; 58; 78). Dieses Kegelrad (38; 58; 78) kämmt mit einem zweiten Kegelrad (39; 59; 79), das beispielsweise auf dem jeweiligen linken Einganselement (33; 53; 73) sitzt, vgl. die Figuren 1, 3 und 4.

Die Eingangselemente (33, 34; 53, 54; 73, 74) sind z.B. zylindrische Schnecken (33, 34; 53, 54; 73, 74), die beispielsweise im Längsschnitt gerade Flanken aufweisen. Sie haben in diesem Ausführungsbeispiel die Bauart von Gewindespindeln. Das bedeutet, das ein an einer Schnecke (33, 34; 53, 54; 73, 74) abwälzendes Rad, z.B. ein Schneckenrad, in der Längsrichtung der Schnecke (33, 34; 53, 54; 73, 74) versetzt wird.

Die beiden Schnecken (33, 34; 53, 54; 73, 74) einer Antriebseinheit (30; 50; 70) sind gleichartig aufgebaut und parallel zueinander angeordnet. Die Steigungen der zu einer Antriebseinheit (30; 50; 70) gehörenden Schnecken (33, 34; 53, 54; 73, 74) sind gleichgerichtet und identisch. Die Schnecken (33, 34; 53, 54; 73, 74), die zu unterschiedlichen Antriebseinheiten (30, 50, 70) gehören, können unterschiedliche Steigungen und/oder Steigungsrichtungen aufweisen.

In dem hier dargestellten Ausführungsbeispiel erfolgt der Antrieb der jeweiligen rechten Schecke (34; 54; 74) beispielsweise mittels einer Einstellwelle (42; 62; 82), die an ihrem einem Ende ein Kegelrad (43; 63; 83) trägt, das mit einem Kegelrad (44; 64; 84) auf der Schnecke (34; 54; 74) im Eingriff ist. Das andere Ende der Einstellwelle (42; 62; 82) ist z.B. an die Außenseite des Gehäuses (11) geführt. Dort kann die Einstellwelle (42; 62; 82) und die hiermit gekoppelte Schnecke (34; 54; 74) beispielsweise mittels Drehen eines Einstellschlüssels eingestellt werden. Die Einstellwelle (42; 62; 82) kann hierbei parallel zur Welle (37; 57; 77) des Antriebsmotors (31; 51; 71) angeordnet sein. Sie ist beispielsweise im Gehäuse (11) mittels einer Gleitlagerung gelagert.

Die Schnecken (33, 34; 53, 54; 73, 74) sind z.B. jeweils in Gehäuseschalen (15, 16) radial gleitend gelagert und axial gehalten. Diese Gehäuseschalen (15, 16) des Unter- (12) und Oberteils (13) umgreifen die Kopfkreisflächen der Schnecken (33, 34; 53, 54; 73, 74). Die Trennfuge zwischen dem oberen (13) und dem unteren Gehäuseteil (12) umfasst beispielsweise die horizontalen Mittenebenen der Getriebe (32, 52, 72).

Zwischen den Schnecken (33, 34; 53, 54; 73, 74) einer Antriebseinheit (30; 50; 70) ist jeweils das Koppelelement (35; 55; 75) angeordnet. Dies ist beispielsweise ein Zahnrad (35; 55; 75), z.B. ein Schneckenrad, das mit beiden Schnecken (33, 34; 53, 54; 73, 74) kämmt. Dieses Zahnrad (35; 55; 75) liegt jeweils in der horizontalen Mittenebene des Getriebes (32, 52, 72). Dort wird ein Wegkippen oder Verkanten des Koppelrades (35; 55; 75) z.B. mittels Radführungsflächen (17) des Gehäuses (11) verhindert.

In jeder Antriebseinheit (30, 50, 70) ist in diesem Ausführungsbeispiel oberhalb des Koppelrades (35; 55; 75) jeweils ein Abtriebselement (36, 56, 76) angeordnet. Dies sind beispielsweise Hebel (36, 56, 76) mit jeweils einem Aufnahmezapfen (46, 66, 86), auf denen das jeweilige Koppelrad (35; 55; 75) gelagert ist. In dem hier dargestellten Ausführungsbeispiel sind die Aufnahmezapfen (46; 86) der unteren beiden Antriebseinheiten (30; 70) ballig ausgebildet. Die auf diesen Aufnahmezapfen (46, 48) gelagerten Koppelräder (35; 75) haben eine ballig ausgeführte Bohrung (47; 87). Der Hebel (56) der oberen Antriebseinheit (50) hat in diesem Ausführungsbeispiel einen zylindrischen Aufnahmezapfen (66), der in einer zylindrischen Bohrung (67) des Koppelrades (55) sitzt. Auch der Aufnahmezapfen (66) dieses Hebels (56) kann ballig ausgeführt sein. Das Bohrungsspiel der balligen (46, 47; 86, 87) und der zylindrischen Führungen (66, 67) ist beispielsweise kleiner als ein Zehntel Millimeter. Gegebenenfalls ist das einzelne Koppelrad (35; 55; 75) auf dem jeweiligen Aufnahmezapfen (46; 66; 86) zusätzlich z.B. mittels eines Sicherungsringes gegen Herabfallen gesichert.

Die Hebel (36; 56; 76) haben beispielsweise einen weitgehend konstanten Querschnitt und ragen auf der dem Lichtmodul (5) zugewandten Seite aus dem Gehäuse (11) heraus. Hier trägt jeder Hebel (36; 56; 76) einen Adapter (48, 68, 88). Die Adapter (48, 88) der unteren beiden Hebel (36, 76) bilden in diesem Ausführungsbeispiel mit den entsprechenden Gegenstücken am Lichtmodul (5) Kugelgelenke (49, 89), die drei rotatorische Schwenkfreiheitsgrade zulassen. Der Adapter (68) des oberen Hebels (56) bildet in diesem Ausführungsbeispiel mit einem am Lichtmodul (5) angeordneten Gegenstück ein Schwenkgelenk (69) mit einer vertikal angeordneten Schwenkachse.

Der Hebel (56) der oberen Antriebseinheit (50) ist beispielsweise im Gehäuse (11) in Querrichtung, vgl. Figur 1 geführt. Die beiden anderen Hebel (36, 76) sind in Querrichtung beispielsweise in einem Winkel von +/- 5 Grad schwenkbar.

Bei der Montage werden beispielsweise zunächst die Schnecken (33, 34; 53, 54; 73, 74) in das untere Gehäuseteil (12) eingelegt. Die Führungsflächen (15, 16, 17) können z.B. gefettet sein. Die Kegelräder (39; 59; 79; 44; 64; 84) zeigen zu der dem Lichtmodul (5) abgewandten Rückseite des Gehäuses (11). Die Hebel (36; 56; 76) mit den Koppelrädern (35; 55; 75) werden so in das Gehäuse (11) eingesetzt, dass die Koppelräder (35; 55; 75) auf den Führungsflächen (17) aufliegen und die Adapter (48; 68; 88) auf der den Kegelrädern (39; 59; 79; 44; 64; 84) entgegengesetzten Seite aus dem Gehäuse (11) herausragen. Nach dem Aufsetzen des oberen Gehäuseteils (13) werden die beiden Gehäuseteile (12, 13) z.B. verschraubt.

An der den Adaptern (48, 68, 88) abgewandten Seite der Gehäuseteile (12, 13) werden nun die Antriebsmotoren (31, 51, 71) z.B. in Gehäusemulden eingesetzt, so dass die Kegelräder (38; 58; 78) in die Kegelräder (39; 59; 79) der Schnecken (33; 53; 73) eingreifen. Die hier nicht dargestellten elektrischen Anschlüsse der Antriebsmotoren (31, 51, 71) werden beispielsweise in einen außerhalb des Gehäuses (11) angeordneten Stecker zusammengefasst. Außerdem werden die Einstellwellen (42; 62; 82) z.B. so in das Gehäuseunterteil (12) eingesetzt, dass die Kegelräder (43; 63; 83) mit dem Kegelrädern (44; 64; 84) kämmen und die entgegengesetzten Enden der Einstellwellen (42; 62; 82) von der Außenseite des Gehäuses (11) her zugänglich sind. Abschließend wird der Deckel (14) auf die Gehäuseteile (12, 13) aufgesetzt und z.B. mit diesen verschraubt.

An die Adapter (48, 68, 88) der so montierten Scheinwerferverstellvorrichtung (10) wird beispielsweise das Lichtmodul (5) angeschlossen und die ganze Einheit im Scheinwerfergehäuse z.B. mittels eines an der Scheinwerferverstellvorrichtung (10) angeordneten Befestigungsflansches befestigt.

Nach dem Zusammenbau des Scheinwerfers und/oder nach dem Einbau des Scheinwerfers in ein Kraftfahrzeug werden die Scheinwerfer justiert. Hierzu stehen beispielsweise die Antriebsmotoren (31, 51, 71) in einer definierten Nulllage, die z.B. mittels eines absoluten Weg- oder Winkelmeßsystems erkannt wird.

Um beispielsweise die Kurvenlichtverstellung zu justieren, werden z.B. die beiden untenliegenden Antriebseinheiten (30, 70) manuell verstellt. Hierzu wird beispielsweise mittels eines Werkzeugs die Einstellwelle (82) der rechten Antriebseinheit (70) gedreht. Die Einstellwelle (82) treibt über das Kegelradgetriebe (83, 84) die Schnecke (74) an. Die drehende Schnecke (74) bewirkt ein Abwälzen des Koppelrades (75) an dieser Schnecke (74) und an der stillstehenden Schnecke (73). Hierbei bleibt die Schnecke (73) aufgrund der Selbsthemmung des Schneckenradpaares (73, 75) und der Reibung der Schnecke (73) im Gehäuse (11) in Ruhe. Das an den Schnecken (73, 74) abwälzende Koppelrad (75) schiebt den Hebel (76) beispielsweise in Richtung der Seite, an der die Adapter (48; 68; 88) aus dem Gehäuse (11) herausstehen. Die linke Antriebseinheit (30) wird beim Justieren z.B. derart verstellt, dass der Hebel (36) in das Gehäuse (11) eingefahren wird. Das Lichtmodul (5) wird hierbei beispielsweise nach links geschwenkt, bis der Sollwert der Justierung erreicht ist.

Analog hierzu werden der Neigungswinkel und die Höheneinstellung des Scheinwerfers justiert. Bei der Justierung des Neigungswinkels werden beispielsweise die beiden unteren Antriebseinheiten (30; 70) gleichsinnig verstellt. Zur Höheneinstellung, z.B. zum Ausgleich von Fertigungstoleranzen, werden z.B. alle drei Antriebseinheiten (30; 50; 70) eingestellt. Gegebenenfalls werden die Wellen (42; 62; 82) nach dem Justieren arretiert.

Beim Betrieb des Scheinwerfers im Kraftfahrzeug werden z.B. bei einer Kurvenfahrt der Antriebsmotor (71) der rechten Antriebseinheit (70) bestromt. Über das Kegelradgetriebe (78, 79) wird die Drehbewegung der Motorwelle (77) auf die z.B. linke Schnecke (73) der Antriebseinheit (70) übertragen. Diese kämmt mit dem Koppelrad (75), das an der selbsthemmenden, feststehenden rechten Schnecke (74) abwälzt. Der Hebel (76) mit dem Adapter (88) wird beispielsweise ausgeschoben. Gleichzeitig wird z.B. der Adapter (48) der linken Antriebseinheit (30), angetrieben vom Antriebsmotor (31), eingefahren. Die obere Antriebseinheit (50) bleibt unbetätigt. Das Lichtmodul (5) schwenkt nach links, wobei z.B. seine Schwenkachse mit der Schwenkachse des Schwenkgelenks (69) zusammenfällt. Die Antriebsmotoren (31, 51, 71) bleiben hierbei relativ zum Scheinwerfergehäuse in Ruhe. Die von der Scheinwerferverstellvorrichtung (10) bewegte Masse - diese umfasst nur das Lichtmodul (5) - beträgt beispielsweise 900 Gramm. Der maximale Verstellwinkel des Lichtmoduls (5) beträgt beispielsweise +/- 15 Grad. Gegebenenfalls kann der maximale Schwenkwinkel einseitig z.B. auf 9,5 Grad begrenzt werden.

Um den Neigungswinkel des Lichtmoduls (5) dem Beladungszustand des Fahrzeuges anzupassen, werden beispielsweise die beiden unteren Antriebseinheiten (30, 70) so verstellt, dass entweder beide Adapter (48, 88) ausgefahren werden oder beide Adapter (48, 88) eingefahren werden. Hierbei schwenkt das Lichtmodul (5) maximal beispielsweise um +/-4 Grad. Gegebenenfalls kann der maximale Schwenkwinkel einseitig z.B. auf 3 Grad begrenzt sein.

Bei der Verstellung des Neigungswinkels wird beispielsweise in den unteren Antriebseinheiten (30, 70) wird der Hebel (36, 76) gegenüber dem Koppelrad (35, 75) in einer Ebene normal zu der Mittenebene der Getriebe (32, 72) geschwenkt. In der oberen Antriebseinheit (50) wird der Hebel (56), er kann ein Filmgelenk umfassen, z.B. elastisch verformt.

Während der Fahrt des Fahrzeuges führen Fahrbahnunebenheiten zu Schwingungen des Fahrzeugaufbaus. Die Selbsthemmung der Schneckengetriebe (33, 34, 35; 53, 54, 55; 73, 74, 75) verhindert eine unbeabsichtigte Verstellung der Scheinwerfer. Auch eine Verdrehung des Lichtmoduls (5) um die Längsachse der Scheinwerferverstellvorrichtung (10) wird verhindert. Gegebenenfalls kann die Scheinwerferverstellvorrichtung (10) bei Nichtbetätigung zusätzlich blockiert sein.

Die Scheinwerferverstellvorrichtung (10) ist aus nur wenigen Bauteilen aufgebaut. Bei der Verstellung des Lichtmoduls werden nur geringe Massen bewegt. Die Scheinwerferverstellvorrichtung (10) erfordert somit ein geringes Anlaufmoment und kann - aufgrund der kleinen bewegten Massen - dynamisch auf Änderungen des Fahrzeugzustandes reagieren. Außerdem sind die Antriebsmotoren (31, 51, 71) beispielsweise aufgrund der Selbsthemmung der Getriebe (32, 52, 72) vor Rückwirkungen des Leuchtmoduls (5), z.B. vor Schwingungen geschützt. Ihr Verschleiß ist damit gering.

Soll beispielsweise im Rahmen einer Reparatur das Lichtmodul (5) oder die Scheinwerferverstellvorrichtung (10) ausgetauscht werden, wird z.B. das Lichtmodul (5) durch Lösen der Adapter (48, 68, 88) von der Scheinwerferverstellvorrichtung (10) getrennt. Nach dem Austausch des beschädigten Bauteils (5; 10) werden die beiden Teile (5, 10) wieder zusammengesetzt. Der Scheinwerfer (1) wird nun manuell neu justiert und ist dann wieder einsatzbereit. Die hier als manuell beschriebene Voreinstellung kann auch mit Hilfe motorisch betriebener Voreinstellwerkzeuge durchgeführt werden.

Die Wellen (37; 57; 77; 42; 62; 82), Schnecken (33, 34; 53, 54; 73, 74) und Koppelräder (35; 55; 75) können anstatt mit den hier beschriebenen Gleitlagerungen auch mit Wälzlagerungen ausgeführt sein. Auch können einige Lagerstellen als Gleitlager und andere Lagerstellen als Wälzlager ausgebildet sein.

Anstatt mittels der Kegelradpaare (38, 39; 43, 44; 58, 59; 63, 64; 78, 79; 83, 84) kann die Übertragung des Antriebsmoments auf die Schnecken (33; 34; 53; 54; 73; 74) auch mittels eines Schraubgetriebes, grad- oder schrägverzahnter Stirnräder, etc. erfolgen. Auch können die Schnecken (33; 34; 53; 54; 73; 74) direkt an die Antriebsmotoren (31, 51, 71) und/oder an die Einstellwellen (42, 62, 82) angeschlossen sein.

Die Figur 5 zeigt einen Querschnitt einer Scheinwerferverstellvorrichtung (10), deren Getriebe (32, 52, 72) Zahnstangen (33, 34; 53, 54; 73, 74) als Eingangselemente umfasst. Diese Zahnstangen (33, 34; 53, 54; 73, 74) sind beispielsweise in der Längsrichtung der Scheinwerferverstellvorrichtung (10) leichtgängig verschiebbar gelagert. Die z.B. linke Zahnstange (33, 53, 73) jeder der drei Antriebseinheiten (30, 50, 70) wird beispielsweise mittels eines Antriebsmotors (31, 51, 71) und eines Ritzels (95) angetrieben. Die jeweils rechte Zahnstange (34, 54, 74) ist dann z.B. manuell mittels einer Einstellwelle (42; 62; 82) und eines Ritzels (95) verstellbar. Die Koppelelemente (35, 55, 75) und die Abtriebselemente (36, 56, 76) sind ähnlich aufgebaut wie in bezug auf das in den Figuren 1 - 4 dargestellten Ausführungsbeispiel beschrieben. Die Ritzel (95), die Zahnstangen (33, 34; 53, 54; 73, 74) und die Koppelräder (35, 55, 75) können grad- oder schrägverzahnt sein.

Um ein unbeabsichtigtes Verstellen der Scheinwerferverstellvorrichtung (10) zu verhindern, können die Antriebseinheiten (30, 50, 70) nach dem Einstellen blockiert werden. Alternativ dazu kann z.B. den Ritzeln (95) je eine selbsthemmende Getriebestufe, z.B. in der Gestalt eines Schneckenradgetriebes, eines Schraubgetriebes, etc. vorgeschaltet werden.

Es ist auch denkbar, die Getriebe (32, 52, 72) als Koppelgetriebe mit zwei starren gelenkig gelagerten Eingangselementen (33, 34; 53, 54; 73, 74), einem an diesen gelenkig gelagerten starren Koppelglied (35, 55, 75) und einem Abtriebselement (36, 56, 76) auszuführen.

Die Getriebe (32, 52, 72) können auch als Rädergetriebe ausgeführt sein. Bei einer derartigen Ausführungsform treibt ein Antriebsritzel das Koppelrad (35, 55, 75). Am Koppelrad (35, 55, 75) ist der Hebel (36, 56, 76) als Abtriebselement befestigt. Die Lage des Aufnahmezapfens (46, 66, 86) relativ zum Koppelrad (35, 55, 75) ist beispielsweise mittels eines Exzenters voreinstellbar. Zur Feineinstellung wird dann das Antriebsritzel betätigt. Auch diesem Getriebe (32, 52, 72) kann z.B. ein selbsthemmendes Getriebe vorgeschaltet sein.

Ebenfalls sind Kombinationen der vorbeschriebenen Ausführungsbeispiele denkbar. Die einzelnen Antriebseinheiten (30, 50, 70) einer Scheinwerferverstellvorrichtung (10) können unterschiedlich ausgeführt sein.

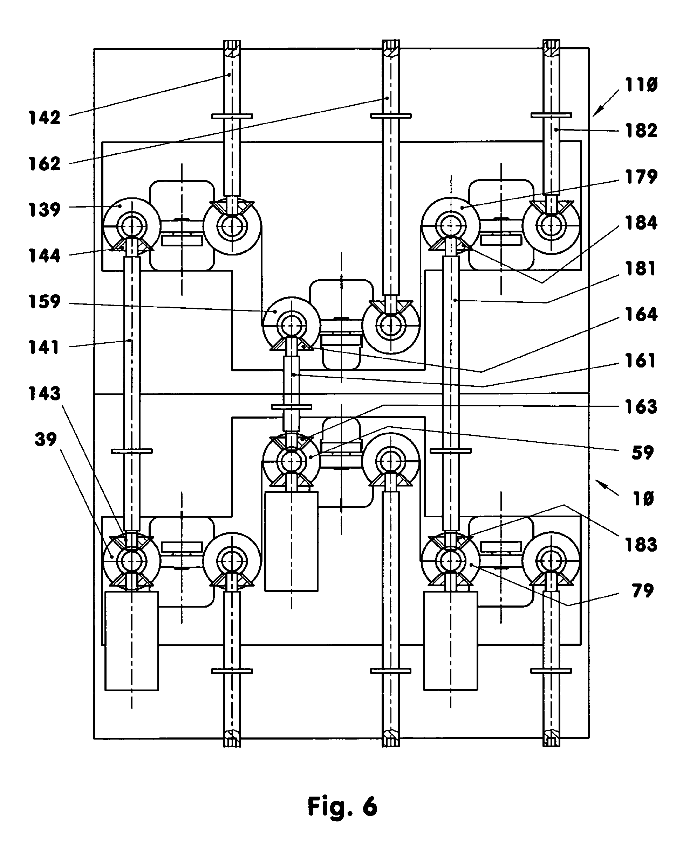

Die Figur 6 zeigt zwei miteinander gekoppelte Scheinwerferverstellvorrichtungen (10; 110) bei abgenommenen Deckeln. Die hier z.B. unten angeordnete Scheinwerferverstellvorrichtung (10) ist beispielsweise mit einem Lichtmodul für das Abblendlicht verbunden. Sie ist im wesentlichen so aufgebaut, wie im Zusammenhang mit den Figuren 1 bis 4 beschrieben. Die in der Figur 6 oben angeordnete zweite Scheinwerferverstellvorrichtung (110) ist beispielsweise mit einem Fernlichtmodul verbunden. Die manuell betätigbaren Einstellwellen (142, 162, 182) sind hier nach oben gerichtet. Die Scheinwerferverstellvorrichtung (110) hat in diesem Ausführungsbeispiel keine Antriebsmotoren. Zwischen den Kegelrädern (39, 139; 59, 159; 79, 179) sind Koppelwellen (141, 161, 181) angeordnet. Diese Koppelwellen (141, 161, 181) tragen an beiden Enden jeweils ein Kegelrad (143, 144; 163, 164; 183, 184), die mit den Kegelrädern (39, 139; 59, 159; 79, 179) kämmen.

Beispielsweise beim Einbau in das Kraftfahrzeug wird mittels der jeweiligen Scheinwerferverstellvorrichtung (10; 110) das einzelne Lichtmodul manuell voreingestellt, z.B. bezüglich der Höhe. Beim Betrieb werden die Lichtmodule gemeinsam mittels der Antriebsmotoren (31, 51, 71) verstellt.

Es ist auch denkbar, dass die Scheinwerferverstellvorrichtung (110) einen oder zwei Antriebsmotoren aufweist. Diese Scheinwerferverstellvorrichtung (110) ist dann nur mit zwei oder mit einer Koppelwelle mit der unteren Scheinwerferverstellvorrichtung (10) verbunden. Hiermit ist es z.B. möglich, nur einzelne Bewegungen des Fern- und Abblendlichtmoduls miteinander zu verbinden. Gegebenenfalls kann auch das Lichtmodul (110) statt der Einstellwellen (142, 162, 182) Antriebsmotore aufweisen. Die Koppelwellen (141, 161, 181) können auch Kupplungen oder Übersetzungsgetriebe aufweisen.

### Bezugszeichenliste:

- 1: Kraftfahrzeugscheinwerfer
- 5: Lichtmodul
- 10: Scheinwerferverstellvorrichtung
- 11: Gehäuse
- 12: Unterteil
- 13: Oberteil
- 14: Deckel
- 15, 16: Gehäuseschalen, Führungsflächen
- 17: Radführungsflächen

- 30, 50, 70: Antriebseinheiten
- 31, 51, 71: Antriebsmotor
- 32, 52, 72: Getriebe
- 33, 53, 73: Eingangselemente, Schnecken, Gewindespindeln, Zahnstangen
- 34, 54, 74: Eingangselemente, Schnecken, Gewindespindeln, Zahnstangen
- 35; 55; 75: Koppelelemente, Koppelräder, Zahnräder
- 36; 56; 76: Abtriebselemente, Hebel
- 37; 57; 77: Motorwelle
- 38; 58; 78: Kegelrad
- 39; 59; 79: Kegelrad

- 42; 62; 82: Einstellwelle
- 43; 63; 83: Kegelrad
- 44; 64; 84: Kegelrad

- 46, 66, 86: Aufnahmezapfen
- 47, 67, 87: Bohrung
- 48, 68, 88: Adapter

- 49, 89: Kugelgelenke
- 69: Schwenkgelenk

- 95: Ritzel

- 110: Scheinwerferverstellvorrichtung

- 139, 159, 179: Kegelräder
- 141, 161, 181: Koppelwellen
- 142, 162, 182: Einstellwellen
- 143, 163, 183: Kegelräder
- 144, 164, 184: Kegelräder

## Patentansprüche

1. Scheinwerferverstellvorrichtung (10) mit mindestens zwei Antriebseinheiten (30, 70) zur Verstellung eines Lichtmoduls (5), wobei jede Antriebseinheit (30, 70) mindestens einen Antriebsmotor (31, 71) umfasst, **dadurch gekennzeichnet,**
- **dass** jede Antriebseinheit (30, 70) ein Getriebe (32, 72) mit zwei relativ zueinander beweglichen Eingangselementen (33, 34; 73, 74) umfasst, die mittels eines Koppelelements (35, 75) miteinander verbunden sind,
- **dass** mindestens ein Eingangselement (33; 34), (73; 74) jeder Antriebseinheit (30, 70) mit dem Antriebsmotor (31, 71) der Antriebseinheit (30, 70) gekoppelt ist,
- **dass** jedes Koppelement (35, 75) mit einem Abtriebselement (36, 76) des jeweiligen Getriebes (32, 72) verbunden ist und
- **dass** jedes Abtriebselement (36, 76) einen Adapter (48, 88) zum Anschluss an das Lichtmodul (5) aufweist.

2. Scheinwerferverstellvorrichtung nach Anspruch 1, **dadurch gekennzeichnet, dass** sie drei Antriebseinheiten (30, 50, 70) mit jeweils einem Antriebsmotor (31, 51, 71) aufweist, wobei die dritte Antriebseinheit (50) ein Getriebe (52) mit zwei relativ zueinander beweglichen Eingangselementen (53, 54) umfasst, die mittels eines Koppelelements (55) miteinander verbunden sind, wobei mindestens ein Eingangselement (53; 54) dieser Antriebseinheit (50) mit dem Antriebsmotor (51) der Antriebseinheit (50) gekoppelt ist, wobei das Koppelement (55) mit einem Abtriebselement (56) verbunden ist und wobei das Abtriebselement (56) einen Adapter (68) zum Anschluss an das Lichtmodul (5) aufweist.

3. Scheinwerferverstellvorrichtung nach Anspruch 1 oder 2, **dadurch gekennzeichnet, dass** das jeweilige zweite Eingangselement (34; 33), (54; 53), (74; 73) manuell einstellbar ist.

4. Scheinwerferverstellvorrichtung nach Anspruch 1 oder 2, **dadurch gekennzeichnet, dass** die Eingangselemente der Getriebe (32, 52, 72) Schnecken (33, 34; 53, 54; 73, 74) in der Bauart von Gewindespindeln sind.

5. Scheinwerferverstellvorrichtung nach Anspruch 4, **dadurch gekennzeichnet, dass** die Antriebsmotoren (31, 51, 71) und die Schnecken (33; 53; 73) jeweils mittels eines Kegelradpaares (38, 39; 58, 59; 78, 79) gekoppelt sind.

6. Scheinwerferverstellvorrichtung nach Anspruch 4, **dadurch gekennzeichnet, dass** die Schnecken (33, 34; 53, 54; 73, 74) in einem Gehäuse (11) der Scheinwerferverstellvorrichtung (10) geführt sind.

7. Scheinwerferverstellvorrichtung nach Anspruch 6, **dadurch gekennzeichnet, dass** die Zahnräder (35; 55; 75) im Gehäuse (11) parallel zu einer durch die jeweiligen Schnecken (33, 34; 53, 54; 73, 74) aufgespannten Ebene geführt sind.

8. Scheinwerferverstellvorrichtung nach Anspruch 7, **dadurch gekennzeichnet, dass** die Zahnräder (35, 55, 75) am Abtriebselement (36, 56, 76) um ihre Achsen drehbar gelagert sind und dass mindestens ein Rad (35; 55; 75) normal hierzu schwenkbar gelagert ist.

9. Kraftfahrzeugscheinwerfer (1) mit mindestens einer Scheinwerferverstellvorrichtung (10) und mit mindestens einem an dieser angeschlossenen Lichtmodul (5), wobei die Scheinwerferverstellvorrichtung (10) mindestens zwei Antriebseinheiten (30, 70) mit jeweils mindestens einen Antriebsmotor (31, 71) umfasst, **dadurch gekennzeichnet,**
- **dass** jede Antriebseinheit (30, 70) ein Getriebe (32, 72) mit zwei relativ zueinander beweglichen Eingangselementen (33, 34; 73, 74) umfasst, die mittels eines Koppelelements (35, 75) miteinander verbunden sind,
- **dass** mindestens ein Eingangselement (33; 34), (73; 74) jeder Antriebseinheit (30, 70) mit dem Antriebsmotor (31, 71) der Antriebseinheit (30, 70) gekoppelt ist,
- **dass** jedes Koppelement (35, 75) mit einem Abtriebselement (36, 76) des jeweiligen Getriebes (32, 72) verbunden ist und
- **dass** jedes Abtriebselement (36, 76) einen Adapter (48, 88) zum Anschluss an das Lichtmodul (5) aufweist.

10. Kraftfahrzeugscheinwerfer nach Anspruch 9, **dadurch gekennzeichnet, dass** mindestens ein motorisch angetriebenes Eingangselement (33; 34), (73; 74) der Scheinwerferverstellvorrichtung (10) mittels einer Koppelwelle (141; 181) mit einer Eingangswelle einer weiteren Scheinwerferverstellvorrichtung (110) gekoppelt ist.
